# EUROPEAN PATENT APPLICATION

(11) **EP 3 984 600 A1**
(43) Date of publication of application: **20.04.2022**
(21) Application number: 20827907.5
(22) Date of filing: 04.06.2020
(51) Int. Cl.: A62B 1/14, F16D 49/02, F16D 63/00

(54) **BRAKE DEVICE**

(30) Priority: 17.06.2019 JP 2019111946
(71) Applicant: Maruichi Co., Ltd., Niigata 959-3904 (JP)
(72) Inventor: MISAKI Noboru, Murakami-shi, Niigata 959-3904 (JP)
(74) Representative: Santarelli
(86) International application number: PCT/JP2020/022150
(87) International publication number: WO 2020/255735

(57) **Abstract**

The present invention is aimed to enable effective braking of a rope. The braking device comprises a friction member surrounding the rope and a hook for applying tension to the friction member in a longitudinal direction of the rope. The friction member is actuated to contact the rope when the tension is applied. The friction member has elasticity in the longitudinal direction of the rope, being formed of, for example, resin, or metal. In another embodiment, the braking device comprises a friction member surrounding the rope, an upper cylindrical member coupled to an upper end of the friction member, and a lower cylindrical member coupled to a lower end of the friction member, wherein the friction member is actuated to contact the rope when the tension is applied thereto, and the friction member has elasticity in the longitudinal direction of the rope.

## Description

### BACKGROUND OF THE INVENTION

### Field of the Invention

The present invention generally relates to a braking device for a rope.

### Description of the Related Art

An ascender which supports climbing as disclosed in, for example, U.S. Pat. No. 8,225,905 is known as braking device for a rope.

In the case of the ascender disclosed in the related art where a cam is pressed against a rope from one direction, the cam is required to form an uneven surface to obtain sufficient friction. However, this can cause locally concentrated stress being applied on the rope that could result in damage on the surface or the other portions of the rope.

Against this background, the present invention aims to provide techniques for effectively braking a rope.

### SUMMARY OF THE INVENTION

The subject matter of the present invention for solving the above-stated problem is a braking device comprising a friction member surrounding a rope and a hook for applying tension to the friction member in a longitudinal direction of the rope. The friction member is actuated to contact the rope when tension is applied. The friction member has elasticity in the longitudinal direction of the rope, being formed of, for example, resin or metal.

The other problems solved by the present invention and solutions thereof are detailed herein with reference to embodiments of the invention and appended figures.

The present invention enables effective braking of a rope.

### BRIEF DESCRIPTION OF THE DRAWINGS

Figure 1 illustrates a braking device 1 according to the first embodiment of the present invention;
Figure 2 illustrates a braking device 1 in contracted and extended state;
Figure 3 illustrates a braking device 1 according to the second embodiment of the present invention;
Figure 4 illustrates a braking device 1 according to the third embodiment of the present invention;
Figure 5 illustrates a braking device 1 according to the fourth embodiment of the present invention;
Figure 6 illustrates a braking device 1 according to the fifth embodiment of the present invention;
Figure 7 illustrates how a plate member 51 and a joint member 52 are connected together;
Figure 8 illustrates a braking device 1 according to the sixth embodiment of the present invention;
Figure 9 illustrates a braking device 1 according to the seventh embodiment of the present invention;
Figure 10 illustrates a typical structure of a conventional braking device 9.
Figure 11 illustrates a braking device 1 according to the eighth embodiment of the present invention;
Figure 12 illustrates a braking device 1 according to the ninth embodiment of the present invention;
Figure 13 illustrates a cylindrical member according to the ninth embodiment of the present invention;
Figure 14 illustrates a cylindrical member according to the ninth embodiment of the present invention;
Figure 15 illustrates a body according to the ninth embodiment of the present invention;
Figure 16 illustrates projections of a cylindrical member according to a variation of the ninth embodiment of the present invention;
Figure 17 illustrates projections of a cylindrical member according to a variation of the ninth embodiment of the present invention;
Figure 18 illustrates a movable mechanism of a cylindrical member according to a variation of the ninth embodiment of the present invention;
Figure 19 illustrates a movable mechanism of a cylindrical member according to a variation of the ninth embodiment of the present invention;
Figure 20 illustrates a movable mechanism of a cylindrical member according to a variation of the ninth embodiment of the present invention;
Figure 21 illustrates a movable mechanism of a cylindrical member according to a variation of the ninth embodiment of the present invention;
Figure 22 illustrates a variation of a cylindrical member according to a variation of the ninth embodiment of the present invention;
Figure 23 illustrates a braking device 1 according to a variation of the ninth embodiment of the present invention;
Figure 24 is a sectional view of a braking device 1 according to a variation of the ninth embodiment of the present invention;
Figure 25 is a schematic view of a cylindrical member according to a variation of the ninth embodiment of the present invention; and
Figure 26 illustrates a cylindrical member according to a variation of the ninth embodiment of the present invention.

### DETAILED DESCRIPTION OF THE PREFERRED EMBODIMENTS

The embodiments of the present invention are detailed herein. A braking device according to the embodiments of the present invention is provided as follows.

1. A braking device comprising:
   a friction member surrounding a rope; and
   a hook for applying tension to the friction member in a longitudinal direction of the rope;
   wherein the friction member is actuated to contact the rope when the tension is applied thereto, and the friction member comprises:
      one or more rings arranged at each of a first and a second end of the friction member; and
      a rod-shaped member penetrating both of the rings at the first and the second end of the friction member.
2. A braking device comprising:
   a friction member surrounding a rope; and
   a hook for applying tension to the friction member in a longitudinal direction of the rope;
   wherein the friction member is actuated to contact the rope when the tension is applied thereto, and the friction member is configured by connecting a plurality of plate members with a plurality of joint members to form a cylindrical shape.
3. The braking device according to 1 or 2 stated above, wherein the friction member is a spring.
4. The braking device according to 1 or 2 stated above, further comprising a covering for housing the friction member, wherein the first end of the friction member is fixed to the covering, a first one of the hook is arranged on the covering, and a second one of the hook is arranged on the second end of the friction member.
5. The braking device according to 1 or 2 stated above, wherein the friction member is formed to have a cylindrical shape with a square or an octagonal cross section.
6. The braking device according to 1 or 2 stated above, further comprising a covering for housing the friction member.
7. A braking device comprising:
   a friction member surrounding a rope; and
   a hook for applying tension to the friction member in a longitudinal direction of the rope;
   wherein the friction member is actuated to contact the rope when the tension is applied thereto, the friction member has elasticity in the longitudinal direction of the rope, and the friction member comprises:
      a plurality of first members with an elongated shape; and
      a plurality of second members turnably connecting the first members.
8. The braking device according to 7 stated above, wherein the plurality of the first members are arranged to make certain angle to the longitudinal direction.
9. The braking device according to 8 stated above, wherein each one of the plurality of the second members connects four of the plurality of the first members together, each one of the plurality of the first members being connected to the second members at their both ends.
10. The braking device according to any one of 7 to 9 stated above, further comprising:
   a first through hole arranged on each of the first members;
   a second through hole arranged on each of the second members; and
   a pin penetrating the first and the second through holes.
11. The braking device according to any one of 7 to 10 stated above, wherein the first member is curved to be convex outward.
12. The braking device according to any one of 7 to 11 stated above, wherein the friction member is formed to have a cylindrical shape with a polygonal cross section.
13. The braking device according to 12 stated above, wherein the polygonal cross section is a square or an octagon.
14. A braking device comprising:
   a friction member surrounding a rope; and
   a hook for applying tension to the friction member in a longitudinal direction of the rope;
   wherein the friction member is actuated to contact the rope when the tension is applied thereto, the friction member has elasticity in the longitudinal direction of the rope, and the friction member is configured by weaving a plurality of long elastic members
   obliquely against the longitudinal direction.
15. A braking device comprising:
   a friction member surrounding a rope;
   an upper cylindrical member arranged on top of the friction member; and
   a lower cylindrical member arranged at the bottom of the friction member;
   wherein the friction member is actuated to contact the rope when tension is applied thereto, and the friction member has elasticity in a longitudinal direction of the rope.
16. The braking device according to 15 stated above, wherein at least one of the upper cylindrical member and the lower cylindrical member has one or more projections on its inner wall.
17. The braking device according to 15 or 16 stated above, wherein at least one of the upper cylindrical member and the lower cylindrical member has a joint part for coupling to at least one end of the friction member, and the joint part comprises a movable member which is turnable in a direction to expand a diameter of the friction member.
18. The braking device according to 17 stated above, wherein the movable member is a hinge.
19. The braking device according to any one of 15 to 18 stated above, wherein at least one of the upper cylindrical member and the lower cylindrical member has an R-shape at an edge formed by the inner wall and an end surface on the side opposite to the friction member.
20. The braking device according to any one of 15 to 19 stated above, wherein at least one of the upper cylindrical member and the lower cylindrical member has an opening and closing mechanism on a side wall thereof.
21. The braking device according to any one of 15 to 20 stated above, wherein the braking device is vertically symmetric.

A braking device according to the first embodiment of the present invention is now described in detail. A braking device 1 of the first embodiment is a descender for controlling slide of a rope by friction, used for the purpose of supporting descent with a rope. The braking device 1 of the present embodiment can also be used as an ascender.

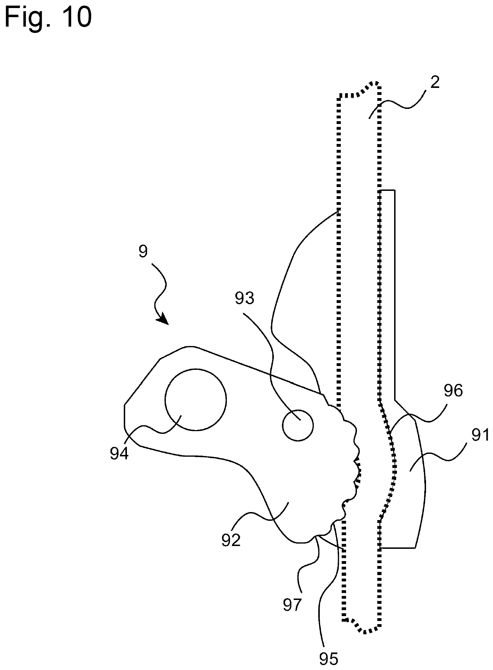

Figure 10 illustrates an exemplary structure of a conventional braking device 9. The conventional braking device 9 comprises a body 91 and a swivel part 92, allowing a rope 2 to pass between them. When a hole part 94 on the swivel part 92, which is on the side opposite to the rope 2, is pulled down in a vertical direction, the swivel part 92 swivels around a pivot 93 to actuate the end 95 to clamp the rope, holding the rope 2 between the end 95 and an inner guiding wall 96 of the body 91 to stop the slide of the rope 2. A plurality of grooves 97 are formed on the end 95 to increase the friction between the end 95 and the rope 2.

Accordingly, in the conventional braking device 9, the rope 2 is held between the end 95 of the swivel part 92 and the inner guiding wall 96 where the uneven end 95 presses the rope 2, making the rope 2 subject to locally concentrated stress which can cause damage on the surface of the rope 2.

For this reason, the present disclosure provides a braking device 1 which generates friction so that stress is given to the rope 2 from more than three directions, preferably from at least four directions, and more preferably from all directions around the rope 2, rather than holding from two directions.

### The first embodiment of the present invention

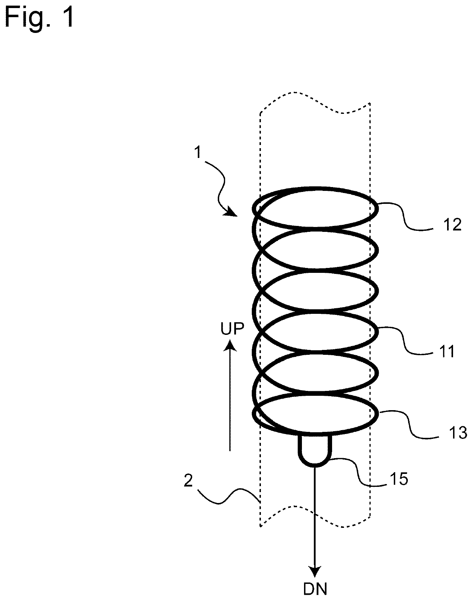

Figure 1 illustrates a braking device 1 according to the first embodiment. In this embodiment, the braking device 1 is expected to be used as a descender. The braking device 1 according to the first embodiment comprises a body 11 configured of a spring. An inner diameter of the body 11 is set to a size allowing a rope 2 to pass therethrough, preferably a size allowing the rope 2 to slide while the inner surface of the body 11 abuts on the surface of the rope 2. A hook 15 is provided at the lower end 13 of the body 11, and is coupled to a climber's body. By pulling down (moving in the DN direction shown in the Figure 1) the lower end 13 for descending, the inner diameter of the body 11 shrinks, friction is increased, and then the body 11 starts descending with an appropriate slide. The inner diameter of the body 11 is expanded and the rope 2 is enabled to slide, for example, when a user pulls up a rope (not shown) coupled to the hook 15 in the UP direction of the Figure 1 or lifts the hook 15 or the lower end 13 up by hand in the UP direction. The user is able to ascend utilizing this mechanism.

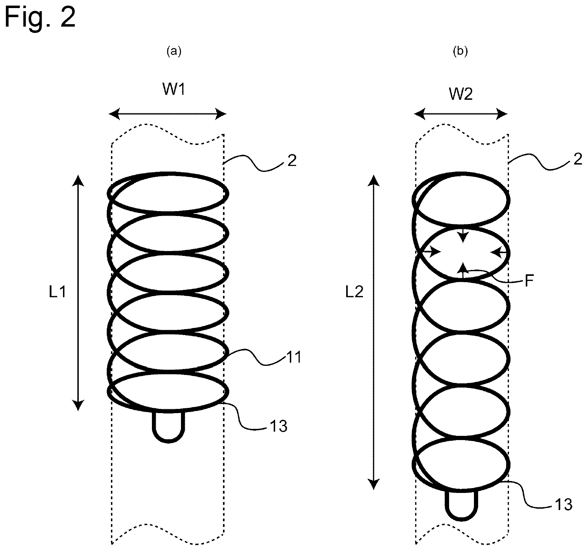

Figure 2 illustrates a braking device 1 in contracted and extended states. Figure 2(b) shows a braking device 1 in a state where the lower end 13 of the body 11 of the braking device 1 shown in Figure 2(a) is pulled down. The longitudinal length of the body 11 shown as L2 in Figure 2(b) is longer than the longitudinal length of the body 11 shown as L1 in Figure 2(a), and the inner diameter of the body 11 shown as W2 in Figure 2(b) is smaller than the inner diameter of the body 11 shown as W1 in Figure 2(a).

In the state of Figure 2(a), the rope 2 is able to slide within the braking device 1 while the inner surface of the body 11 abuts on the surface of the rope 2. On the other hand, in the state of Figure 2(b), inward force F in the radial direction from all around the rope 2 is applied on the rope 2 by the body 11. Accordingly, the friction between the body 11 and the rope 2 is increased, making the rope 2 unable to slide relative to the body 11. This can work as a brake for the rope 2. As such, the braking device 1 is capable of braking the rope 2 passing therethrough.

In the braking device 1 of the present embodiment, the body 11 can apply inward force F in the radial direction approximately uniformly on all around the rope 2. Therefore, compared to the conventional braking device in which a rope is held only from two directions such as shown in Figure 10, it can reduce concentration of force applied on the rope 2 (disperse the force applied on the rope 2), resulting in reduction of risk of damage especially on the surface of the rope 2. Since the surface of a rope is mostly responsible for tensile strength of the rope, it is possible to prevent reduction of tensile strength of the rope 2 and to elongate the lifetime thereof, by reducing damage on the surface of the rope.

### The second embodiment of the present invention

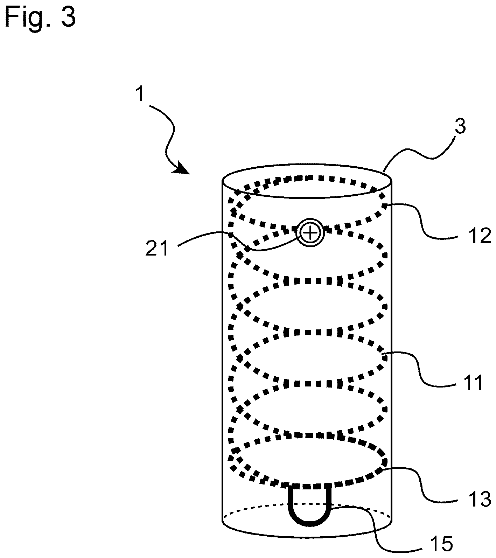

Figure 3 illustrates an example of a braking device 1 according to the second embodiment of the present invention. In the second embodiment, there is provided a body 11 which is substantially similar to that of the first embodiment, except that it is housed in a case 3. In the second embodiment, the case 3 is assumed to have a cylindrical shape, while it may be, for example, a polygonal cylinder. Preferably, the longitudinal length of the case 3 may be equal to or more than the longitudinal length of the body 11. The longitudinal length of the case 3 may be more than a total length of the body 11 and a hook 15.

The body 11 is fixed to the case 3 at a fixing part 21. It is desirable that an upper end 12 of the body 11 is fixed to the case 3 at the fixing part 21. The fixing part 21 may be provided at one or more positions. For example, one or more positions of the upper end 12 may be fixed to the case 3. Moreover, the fixing part 21 may preferably be provided so as to make a pair facing each other within the cylinder.

As the case 3 covers the body 11, the braking device 1 of the second embodiment can prevent accidents such as hindering the extension of the body 11 which is configured of a spring or the like and pinching a user's hand in the spring, caused by grasping the body 11.

### The third embodiment of the present invention

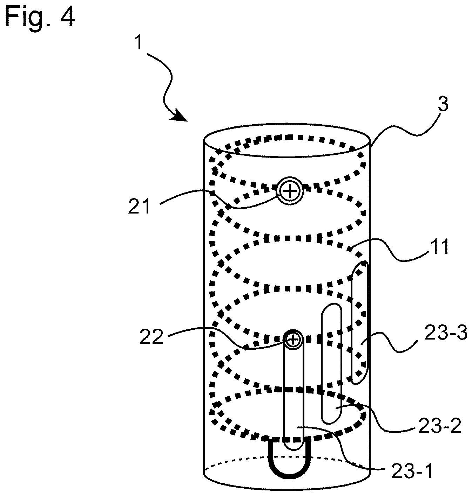

Figure 4 illustrates an example of a braking device 1 according to the third embodiment of the present invention. The braking device 1 of the third embodiment corresponds to that of the second embodiment shown in Figure 3, except that the range of the extension is limited.

In the braking device 1 of the third embodiment, there is provided a second fixing part 22 to slidably fix the lower part of a body 11 to a case 3. In the example shown in Figure 4, the fixing part 22 slidably fixes the body 11 at a portion that is above the lower end 13, while more preferably it slidably fixes the lower end 13.

A plurality of slits 23 are provided on the case 3. The fixing part 22 is disposed such that it is fixed to the body 11, being slidable within the slits 23. The fixing part 22 is feasible by, for example, screwing a bolt from outside the case 3 through the slits 23 into a nut fixed on the body 11.

A movable range of the fixing part 22 is limited by the slits 23, and the range of extension of the body 11 is limited thereby. Moreover, the slits 23 are arranged at positions shifted from each other in the longitudinal direction of the case 3. This enables to change at which slit 23 to dispose the fixing part 22 in accordance with the thickness of the rope 2.

It is preferable that there is almost no space between the rope 2 and the body 11 of the braking device 1 for eliminating the time required to start sliding after a hook 14 or 15 is pulled. In the braking device 1 according to the third embodiment, the body 11 is adjustable so as to eliminate the space between the rope 2 and the body 11 of the braking 1 by changing at which slit 23 to dispose the fixing part 22.

### The fourth embodiment of the present invention

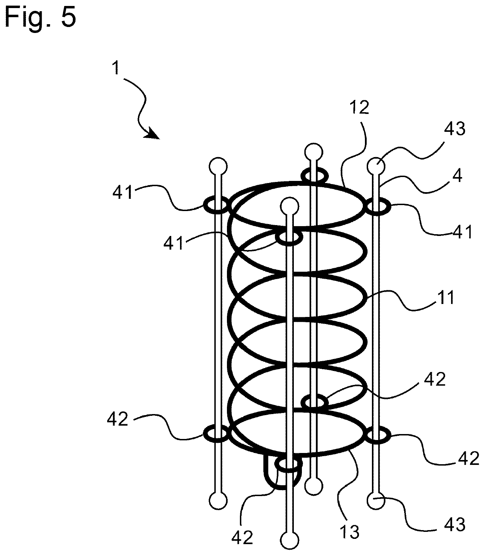

Figure 5 illustrates an example of a braking device 1 according to the fourth embodiment of the present invention. In the braking device 1 according to the fourth embodiment, there are provided a plurality of rod-shaped protection members 4, instead of the case 3, arranged in surrounding of the body 11. As shown in Figure 5, the same number of rings 41 and 42 as the protection member 4 are provided at an upper end 12 and a lower end 13 of the body 11 respectively, such that the protection members 4 are arranged to pass through respective rings. Both ends 43 of the protection members 4 may have a spherical shape with a diameter which is larger than that of the rings 41 and 42, in order to prevent the protection members 4 from slipping off.

Similarly to the second and the third embodiment, the braking device 1 according to the fourth embodiment makes it possible to reduce the risks such as hindering the extension of the body 11 and pinching a user's hand to get injured, even when a user grasps the body 11.

### The fifth embodiment of the present invention

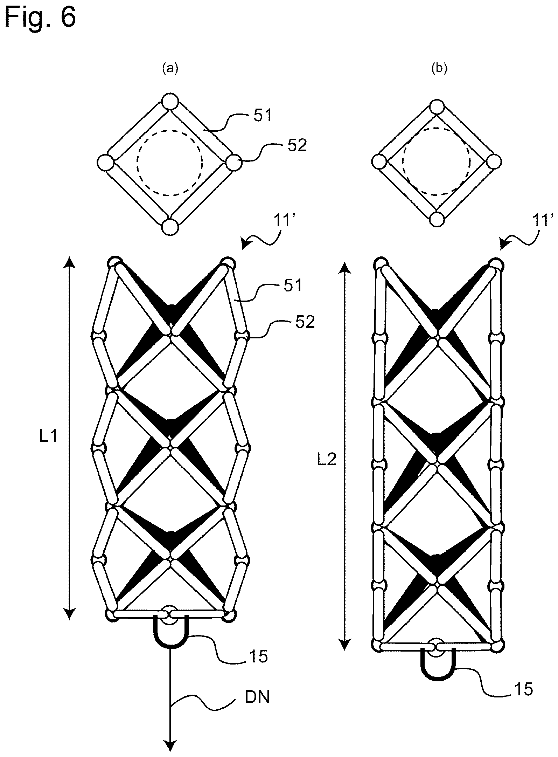

Figure 6 illustrates a braking device 1 according to the fifth embodiment of the present invention. In the braking device 1 according to the fifth embodiment, instead of a spring, a body 11' is configured of a plurality of plate members 51 to form a cylindrical shape with a square cross section.

The plate members 51 may have curved shape which is convex to outside the body 11'. That is to say, the plate members 51 may be curved so as to approximate the cross section of the body 11' to a circle.

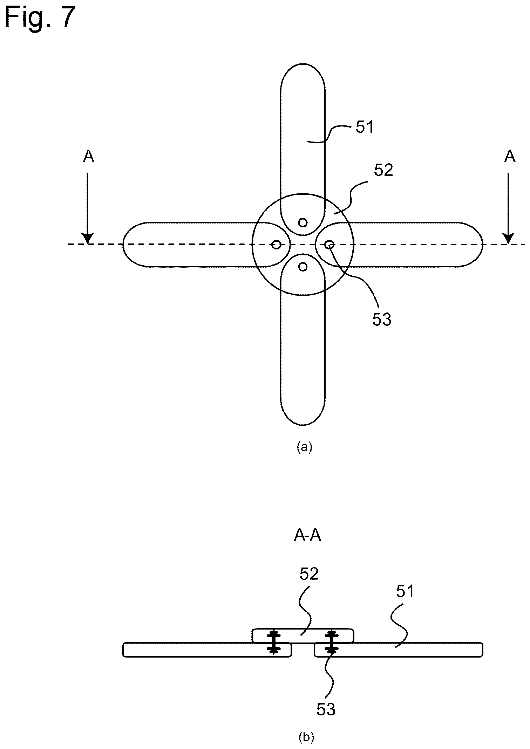

A joint member 52 is provided among a plurality of the plate members 51. In the fifth embodiment, the joint member 52 has a disk shape. Figure 7 illustrates how the plate members 51 and the joint member 52 are connected together. The joint member 52 has four through holes, each of the plate members 51 also has through holes on its both ends, and the joint member 52 and the plate members 51 are connected together with a pin 53 penetrating the through holes provided on the joint members 52 and the plate members 51 such that each plate members 51 are turnable around the pin 53.

A plurality of the joint members 52 each of which is connected to four of the plate members 51 are arranged to form a cylindrical shape with a square cross section as described above. The end of the plate members 51 the other side of which is connected to one of the joint members 52 is connected to another joint member 52. As shown in Figure 6, all of the plate members 51 (except those arranged at the lower end of the body 11') are arranged to make certain angle to the longitudinal direction (the direction parallel to the arrow DN). This causes each of the angles formed by a pair of laterally adjacent plate members 51 to decrease when tension is applied to the body 11' in the DN (or opposite to DN) direction, resulting in extended total longitudinal length and smaller diameter of the body 11'.

Figure 6(a) illustrates the body 11' when tension is not applied to the hook 15 and Figure(b) illustrates the body 11' when tension is applied to the hook 15. As shown in these figures, L1, a longitudinal length of the body 11', can extend to L2 generating inward stress when force is applied to the body 11' in the DN direction. For this reason, certain space (i.e., a play) may be given between the plate member 51 and the joint member 52 in the joint part connecting the plate members 51 and the joint member 52 with the pin 53. The extension of the body 11' generating inward stress causes friction between the body 11' and the rope 2, and it operates as a braking device for the rope 2.

### The sixth embodiment of the present invention

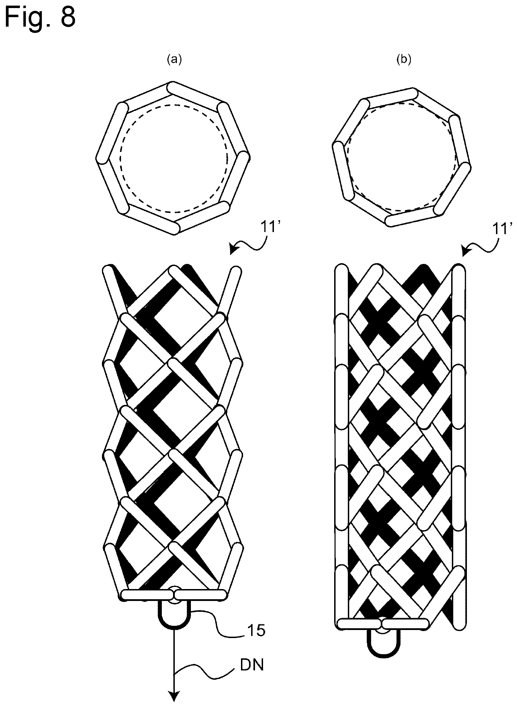

Figure 8 illustrates a braking device 1 according to the sixth embodiment of the present invention. A body 11' of the braking device 1 according to the sixth embodiment has a similar structure to that of the fifth embodiment, except that it has an octagon as a cross section of the cylindrical body 11'. In the sixth embodiment, as well as in the fifth embodiment, all of the plate members 51 (except those arranged at the lower end of the body 11') are arranged to make certain angle to the longitudinal direction of the body 11' (the direction parallel to the arrow DN).

If tension is applied in the DN direction to the body 11' which is in a state of Figure 8(a) where tension is not applied, the state of the body 11' transits to that shown in Figure 8(b) and inward stress is generated. In the sixth embodiment, because the body 11' has an octagon as its cross section, the braking device 1 has more points to contact a rope 2 when the inward stress is generated, compared to that of the fifth embodiment. Thus, friction can be generated more easily and reliably.

### The seventh embodiment of the present invention

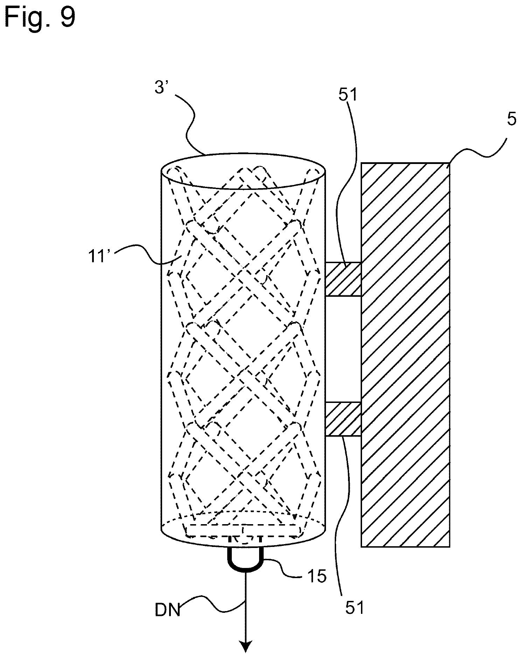

Figure 9 illustrates a braking device 1 according to the seventh embodiment of the present invention. In the seventh embodiment, the body 11' according to the sixth embodiment is housed in a case 3'. By housing the body 11' in the case 3', it becomes possible to prevent the diameter of the body 11' from unnecessarily expand. As a result, the time required to apply stress on a rope 2 (not shown) to generate friction after pulling a hook 15 in the DN direction is reduced.

Furthermore, Figure 9 illustrates an example where the braking device 1 is mounted on a wearing tool 5 such as shoes by means of a fixing device 51. By fixing the braking device 1 on the user's wearing tools in such a way, it is facilitated to use the braking device 1 as an ascender.

### Exemplary variation of the present invention

As described above, when tension is applied vertically (in the longitudinal direction) to the braking device 1 of the present embodiment, the diameter of the body 11, 11' shrinks and the inner side of the body 11, 11' contact the rope 2 generating inward stress on the rope 2. This causes friction to be generated between the body 11,11' and the rope 2 making the rope 2 stop sliding. The braking device 1 of the present embodiment allows the body 11, 11' to apply inward stress approximately uniformly on all around the rope 2. Therefore, it can reduce concentrated stress applied on the surface of the rope 2, compared to the conventional braking device in which a rope is held only from two directions.

In the braking device 1 according to the embodiments 1 to 4, the body 11 is configured of a spring. Therefore, the body 11 shrinks and its diameter expands only by loosening the vertically applied tension (in the longitudinal direction), making the rope 2 movable within the body 11. As a result, a user can easily brake the rope 2.

In the braking device 1 according to the embodiment 5 and 6, the body 11' is configured of a plurality of the plate members 51 turnably connected with a plurality of the joint members 52 such that they are reticularly arranged to form a polygonal cylinder. Although the body 11' is not contractile like the body 11 of the embodiments 1 to 4, the inward stress on all around the rope 2 can be released only by loosening the vertically applied tension (in the longitudinal direction), immediately making the rope 2 movable within the body 11'. As a result, a user can easily brake the rope 2 as well.

Although embodiments of the present invention have been described, these embodiments are aimed to facilitate understanding of the invention, and not to be construed as limitation for the invention. The present invention may be changed and modified without departing from the scope of the invention, and the equivalent is also included therein.

For example, in the embodiment 1 to 4, although the body 11 has been described to be configured of a spring, it may not necessarily have an elasticity as far as it is deformable such that its diameter becomes smaller when both ends are pulled in the opposite directions.

Moreover, in the case where a spring is adopted for the body 11, the characteristics of the spring such as a form of a wire and a spring constant may be arbitrarily chosen. For example, the spring may be a rectangular wire coil spring or an elliptical coil spring. A compression spring may also be adopted for the body 11.

Additionally, although the rope 2 passing through the body 11 is assumed to extend downward in the embodiments 1 to 4, the direction in which the rope 2 extends may be changed by means of a pulley provided in the vicinity of the lower end 13 of the body 11 (preferably the case 3 or the protection member 4 covering the body 11). This allows the rope 2 to be pulled up easily and enables smooth slack tending.

On the other hand, although a body 11' of a braking device 1 in the embodiment 5 and 6 has been described to form a cylindrical shape with a square or an octagonal cross section, it may be a cylindrical shape with any polygonal cross section, without being limited to the described shapes. However, it is preferable not to adopt a triangle for the cross section because the body 11' with a triangle cross section is unable to generate inward stress efficiently due to the nature of a triangle being stable. Additionally, in the case where the cross section is a polygon whose number of angles is a multiple of 3, it is unable to arrange all of the plate members 51 to make certain angle to the longitudinal direction of the body 11' (the direction parallel to the arrow DN) like the braking device 1 according to the embodiment 5 and 6 shown in Figure 6 and 8 respectively, as a polygon causes an existence of plate members 51 which laterally bridges two joint members 52 in a direction orthogonal to the longitudinal direction, causing insufficient inward stress. Therefore, it is preferable not to adopt a polygon whose number of angles is a multiple of 3 for the cross section.

Additionally, although the plate member 51 is assumed to be a platy component in the embodiment 5 and 6, a rod-shaped component may also be adopted for the plate member 51. The plate member 51 may have a curved shape which is convex to outside the body 11' as well as a planar shape. In the case where the plate member 51 is curved, especially in the case where the body 11' is formed of a plurality of the curved plate members 51 to have an approximately circular cross section, when tension is released after being applied to the body11', a repulsive force is generated between the curved plate member 51 and the joint member 52, that is to say, stress toward outside the body 11' is generated, immediately eliminating the friction between the body 11' and the rope 2.

### The eighth embodiment of the present invention

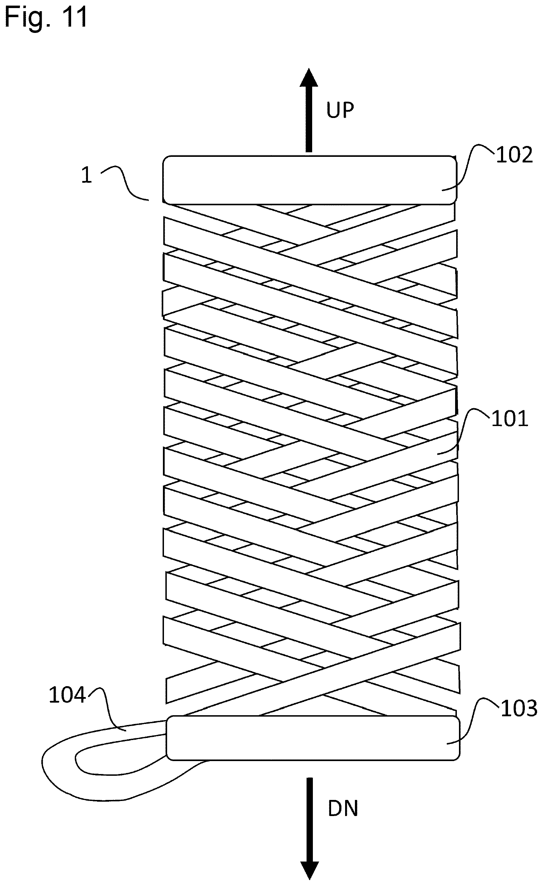

Figure 11 illustrates a braking device 1 according to the eighth embodiment of the present invention. Although the braking device 1 in the present embodiment assumes to be used as a descender, it can also be used as an ascender. The braking device 1 according to the eighth embodiment comprises a body 101 which is formed of extensible material such as resin, metal, or mixture of them (for example, mixed in the ratio of 50:50). Moreover, the body 11' may be integrally molded, for example, by a 3D printer. The diameter of the body 101 is determined such that a rope (not shown) is able to pass therethrough, and preferably such that the rope is slidable while the inner surface of the body 101 abuts on the surface of the rope. By coupling the hook 104 provided at the lower end 103 of the body 101 to a user's body, for example, by means of a harness, and pulling down (move in the DN direction in Figure 11) the upper end 102 for descending, the diameter of the body 101 expands and therefore friction between the rope and the body 101 is reduced, so that the body 101 can start descending with an appropriately slide. When a user pulls up the rope (not shown) coupled to the hook 104 in the UP direction or lifts the hook 104 or the lower end 103 up by hand in the UP direction, the diameter of the body 101 expands and the rope becomes slidable. The user can ascend by utilizing this mechanism.

The braking device 1 according to the present embodiment can apply inward force F in the radial direction approximately uniformly on all around the rope. Therefore, compared to the conventional braking device in which a rope is held only from two directions such as shown in Figure 10, it can reduce concentrated force applied on the rope (disperse force applied on the surrounding of the rope), leading to reduction of risk of wear and tear especially on the surface of the rope. Because a braking device generates friction and transmits the tension to the rope by contacting the surface of the rope, reducing the damage on the surface of the rope results in preventing tensile strength of the rope from decreasing and in elongating the lifetime thereof.

Furthermore, the body of the braking device 1 according to the present embodiment may be integrally molded by a 3D printer, so that the number of components is reduced compared to the case where a plurality of components are assembled. This can suppress variation in quality arising from assembling, leading to reduction in manufacturing man-hours. The body 101 is preferably made of a heat-resistant material such as ABS resin and polyester, in consideration of molding by a 3D printer. In addition, in the case where the material of the body 101 is resin, for example, a powder component may be mixed in order to make the rope slide.

In the case where the material of the body 101 is metal, it is preferable to be a flexible wire-shaped component. For the other possibilities, the body 101 may be woven with a plurality of thin ropes formed of fibers such as nylon, polyester, mixed spinning of Technora^{®} and polyester, and mixed spinning of Kevlar^{®} and polyester. For example, it is possible that the upper end 102, the lower end 103, and a hook 104 are formed of metal, and the body 101 is formed of a plurality of ropes described above. In such case, the plurality of ropes may be tied to a plurality of through-holes provided on the upper end 102 and the lower end 103.

Furthermore, the present braking device may be utilized as a backup device for a winch. The braking device 1 of the present embodiment, as well as the first embodiment, can be applied to the other embodiments such as the second embodiment to the extent that it is applicable to the configuration thereof.

### The ninth embodiment of the present invention

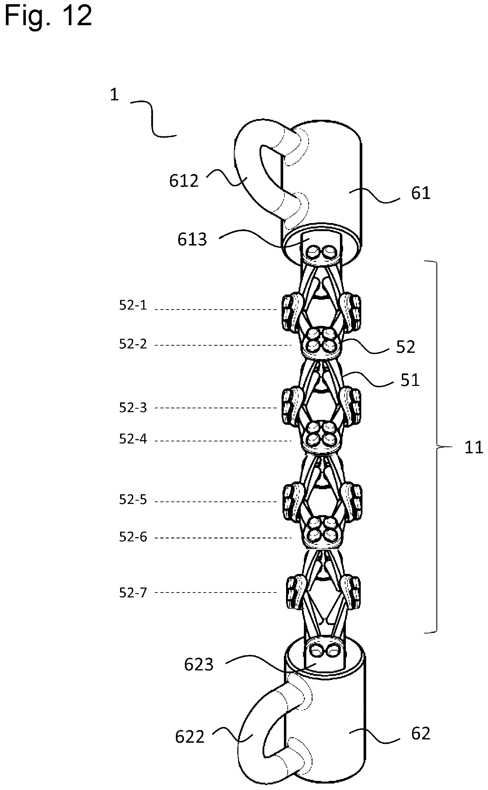

Figure 12 illustrates a braking device 1 according to the ninth embodiment. In the present embodiment, the braking device 1 comprises a body 11, an upper cylindrical member 61, and a lower cylindrical member 62, the upper and lower cylindrical member being connected to the body 11 at the upper end and the lower end respectively. The body 11 is configured by combining a plurality of an approximately disk-shaped joint members 52 and a plurality of an elongated plate members 51. The upper cylindrical member 61 and the lower cylindrical member 62 have an approximately cylindrical shape, and each of the members preferably has at least one U-shaped hook 612, 622. The upper cylindrical member 61 has an upper joint part 613 connectable to the plate member 51 at the upper end of the body 11, and the lower cylindrical member 62 has a lower joint part 623 connectable to the plate member 51 at the lower end of the body 11, so that the body 11 can connect to the upper cylindrical member 61 and the lower cylindrical member 62. Both the upper cylindrical member 61 and the lower cylindrical member 62 have a cylindrical shape as a whole and a through-hole at the center of the cylinder. When using the braking device 1, a rope 2 can be inserted into each of the through-holes and the center of the body 11.

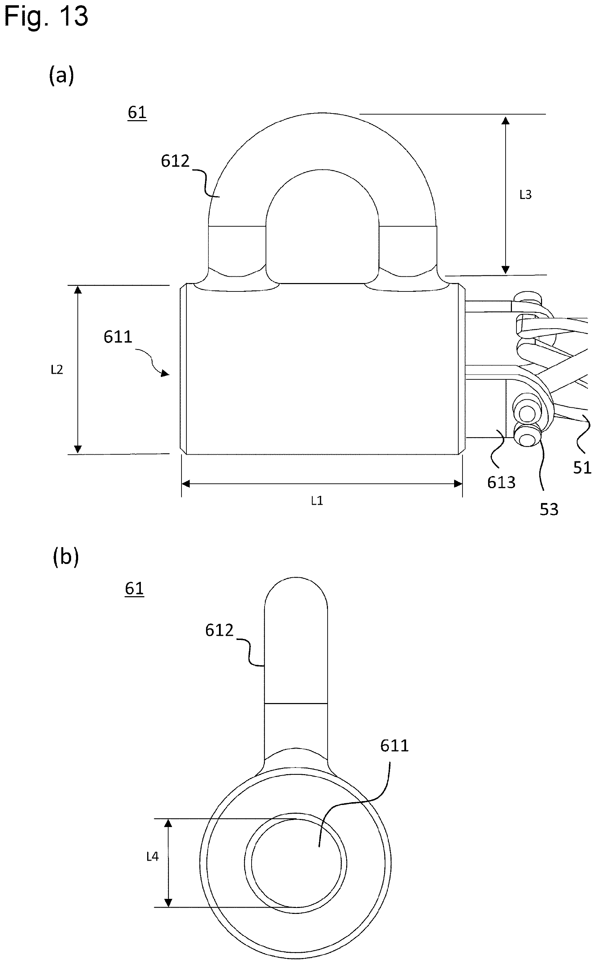

Figure 13 illustrates the upper cylindrical member 61 and the lower cylindrical member 62. The upper cylindrical member 61 is representatively shown since the lower cylindrical member 62 may have the same structure. Figure 13(a) is a side view and Figure 13(b) is a top view of the upper cylindrical member 61. The upper cylindrical member 61 has an approximately cylindrical shape with a though-hole 611 penetrating transversely in the side view so that the rope 2 can pass therethrough. The upper cylindrical member 61 may comprise a U-shaped hook 612 on its side surface. It may also comprise the upper joint part 613 on a side connected to the body 11. The upper joint part 613 may have any structure to the extent that it is capable of connecting to the body 11, such as a plate-like member similar to the joint member 52 as shown. The plate-like member may have a predefined number (2 in Figure 13) of through-holes penetrating in the thickness direction so that it can be fixed to the plate member 51 with a pin 53. One or more upper joint parts 613 may be provided while exemplary 2 upper joint parts are provided in Figure 13.

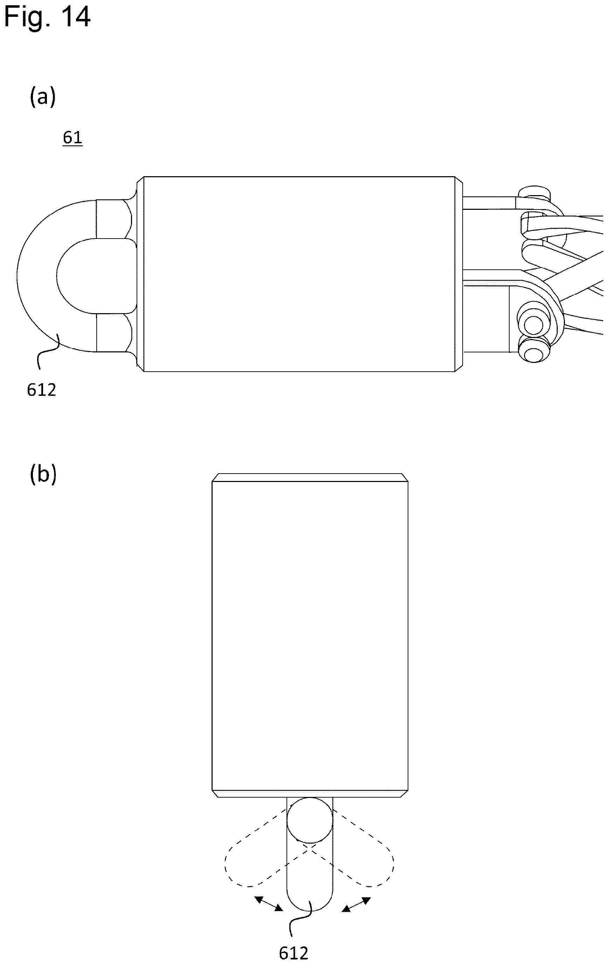

A hook 612, 622 may be provided on a side surface or an end surface of the upper cylindrical member 61 and the lower cylindrical member 62 respectively. In the example shown in Figure 13, the hook 612 is provided on the side surface of the upper cylindrical member 61. On the other hand, Figure 14 is an illustration for a case where the hook 612 is provided on the upper end surface. By providing the hook 612, 622 on the end surface, the braking device 1 is preferably subject to vertical force when the braking device 1 is vertically pulled up and down by means of the rope 2 coupled to the hook. The hook 612, 622 may be mounted to be capable of changing their angle to the cylindrical member. Especially in the case where the hook is provided on the end surface of the cylindrical member as shown in Figure 14(a), a movable member may be provided at a base of the hook where the hook 612 is mounted to the cylindrical member, as shown in the top view of the cylindrical member in Figure 14(b), such that the end of the hook opposite to the base is able to change its angle in the direction shown by an arrow. Making the hooks 612, 622 capable of changing their angle to the cylindrical member can prevent the hooks from hindering a passage of the rope 2.

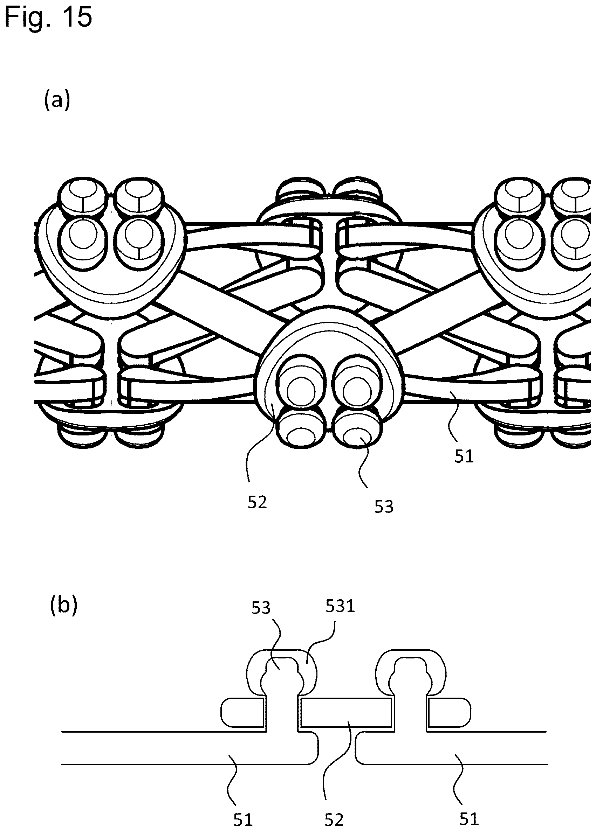

Figure 15(a) illustrates an enlarged view of the body 11. The body 11 is configured of a combination of the plurality of the joint members 52 and the plurality of the plate members 51. The joint members 52 have approximately circular disc shapes with a predetermined thickness. The joint members 52 have a plurality of through-holes for connecting to the plate members 51. One joint member 52 may have four through-holes in the case where it is connected to four plate members 51, as shown in the Figure 15(a). The joint members 52 and the plate members 51 are preferably warped to be convex to the outer side such that they conform to the rope 2 passing through the body 11 in the longitudinal direction. Each of the plate members 51 has an elongated shape with a predetermined thickness. The elongated plate members 51 are turnably connected to the joint members 52 at their both ends. These members are connected with a pin 53 as shown, but the means for connecting is not limited to this example. Figure 15(b) is a cross sectional view of the joint part for the joint member 52 and the plate member 51. The plate member 51 may comprise a pin 53 at its end. The plate member 51 and the pin 53 may be provided integrally or separately, while it is preferable that the undersurface (the side contacting the rope 2) of the plate member 51 is a plane surface without the pin 53 projecting from the surface in order for the rope 2 to slide. The joint member 52 may comprise through-holes preferably designed to have a diameter to make space around the pin 53 so that the plate member 51 is turnable with respect to the joint member 52. Moreover, the pin 53 may have a cap 531 for preventing the plate member 51 from dropping out from the joint member 52, as required. The plate member 51 only needs to be connected to the joint member 52 so as to be turnable with respect to the joint member 52. Hence, the connecting mechanism is not limited to that by a pin shown in Figure 15, but may be the other mechanisms such as by a hinge.

Referring back to Figure 12, the joint member 52 joins four plate members 51 with each other. As a whole, a plurality of the joint members 52 are arranged such that they make a plurality of pairs, each of the pair is located to face each other at longitudinally corresponding position, and each pair makes a 90 degrees angle along the circumferential direction of the body 11 with respect to a longitudinally adjacent pair at an equal longitudinal interval. It is preferable to provide odd number of the pair of the joint member 52 so as to make it symmetric against a longitudinal center of the body 11. In the example of Figure 12, seven pairs of the joint member 52 shown as 52-1 to 52-7 are provided.

For use as an ascender, similarly to the previous embodiment, when the lower cylindrical member 62 is lifted up, the body 11 shrinks and the diameter of the body 11 formed of the plate members 51 and the joint members 52 expands. Accordingly, the friction between the body 11 and the rope 2 is eliminated and the braking device 1 can be easily lifted up relative to the rope 2. On the other hand, when the lower cylindrical member 62 is pulled down, the body 11 is extended and the diameter of the body 11 formed of the plate members 51 and the joint members 52 shrinks. This causes a friction between the body 11 and the rope 2 to rapidly increase and the braking device 1 to stop sliding downward relative to the rope 2.

The upper cylindrical member 61 and the lower cylindrical member 62 may be formed of metal, ceramic, resin, or mixture of them determined with consideration of strength and durability. The joint member 52 and the plate member 51 may be formed of metal, ceramic, resin, or mixture of them, determined with consideration of frictional characteristics and strength. For example, they may be formed of metal such as stainless, aluminum, and titanium, or resin such as ABS resin and MC nylon.

According to the present embodiment, providing the upper cylindrical member 61 and the lower cylindrical member 62 makes it easier for a user to grasp and operate the braking device 1 in a vertical move.

An exemplary design according to the present embodiment is given below. The design of the braking device can be optimized in accordance with a thickness and a material of the rope and purpose of use. An example described herein is a case where a rope whose diameter is approximately 12mm is used. In Figure 13, a longitudinal length of a cylindrical member shown as L1 is 20mm-100mm, preferably 40mm-60mm with consideration of usability (i.e., ease to grasp). An outer diameter of the cylindrical member shown as L2 is 15mm-50mm, preferably 25mm-35mm with consideration of strength. A size of the hook 612 along the direction perpendicular to the longitudinal direction, shown as L3, only needs to allow a rope to be tied thereto, being, for example, 10-50mm, preferably 20-35mm. An inner diameter of the cylindrical member shown as L4 is designed to be slightly larger than the diameter of the rope 2, being, for example, 12.5mm-16mm, preferably and approximately 14mm.

### Exemplary variation 1 of the ninth embodiment

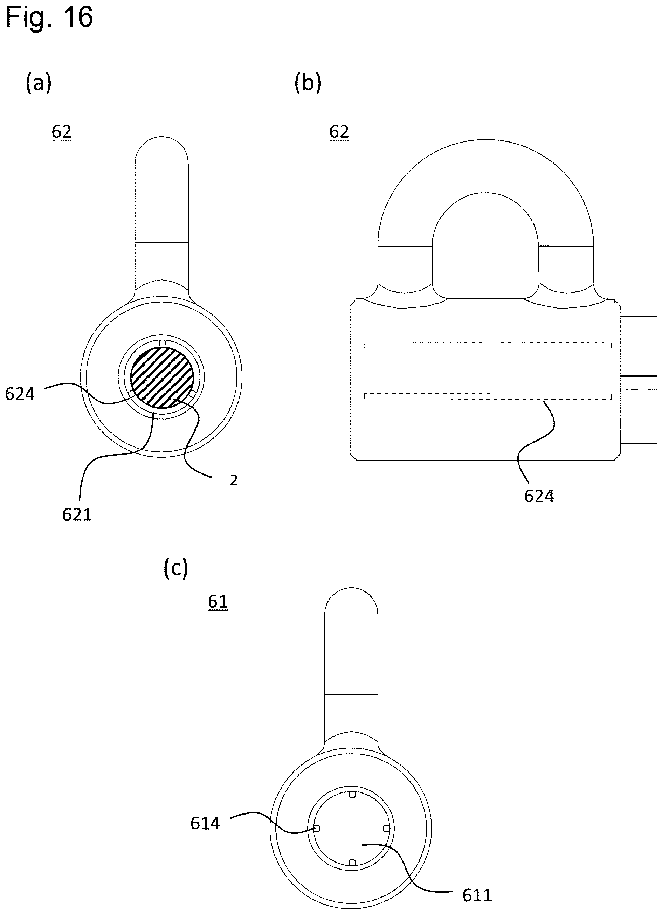

Figure 16 illustrates the exemplary variation 1 of the ninth embodiment. In this example, at least one of the through-holes 611, 621 of the upper cylindrical members 61 and the lower cylindrical members 62 comprises projections 614, 624. The projections 614, 624 serve as a trigger to generate friction between the rope 2 and the braking device 1. If a gap between the diameter of the rope 2 and the inner diameter of the upper cylindrical member 61 or the lower cylindrical member 62 is too small, it hinders smooth move when the rope 2 passes through the braking device or when the braking device is lifted up, whereas if the gap is too large, friction is hardly generated when the braking device is extended to stop sliding relative to the rope 2. For this reason, projections 614, 624 are provided on at least one of the upper cylindrical members 61 and the lower cylindrical members 62. By providing the projections 614, 624, generation of friction can be appropriately triggered upon extension of the braking device 1.

Figure 16(a) and Figure 16(b) are a bottom view and a side view of the lower cylindrical member 62 respectively, and Figure 16(c) is a top view of the upper cylindrical member 61. The lower cylindrical member 62 comprises the projections 624 on the inner surface of the through hole 621. As shown in Figure 16(a), the projections 624 are formed with certain thickness to abut on the rope 2. In other words, the thickness can be set to a size approximately equal to or slightly smaller than the difference between the diameter of the through hole 621 and that of the rope 2. For example, in the case where the diameter of the through hole 621 and the rope 2 are 14mm and 12mm respectively, the thickness of the projections 624 can be set to 1mm.

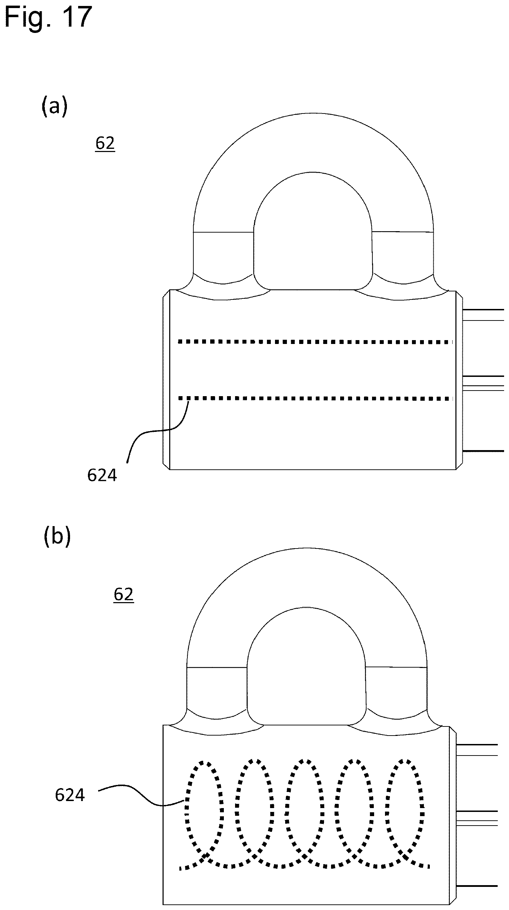

For example, the projections 624 can be thin and elongated in the longitudinal direction of the through hole 621 of the lower cylindrical member 62, having a predetermined length, as shown in Figure 16(b), while the shape of the projections is not limited to this example. The other examples can be small projections 624 aligned at equal intervals as shown in Figure 17(a) and that aligned spirally along the inner surface of the through hole 621 in the longitudinal direction, as shown in Figure 17(b).

Moreover, the number of the projections and the substantial length thereof in total may be different between the upper cylindrical member 61 and the lower cylindrical member 62 such that the upper cylindrical member 61 has more projections than the lower cylindrical member 62. In the example of Figure 16, the lower cylindrical member 62 has three projections 624 and the upper cylindrical member 61 has four projections 614. This is aimed to generate larger friction at the upper cylindrical member 61 than at the lower cylindrical member 62 when pulling down the lower cylindrical member 62 to generate friction. The number of projections at each cylindrical member can be suitably designed with consideration of the difference of friction, while not limited to the foregoing example. In addition, the material of the projections may be metal, resin, ceramic, or mixture of them.

### Exemplary variation 2 of the ninth embodiment

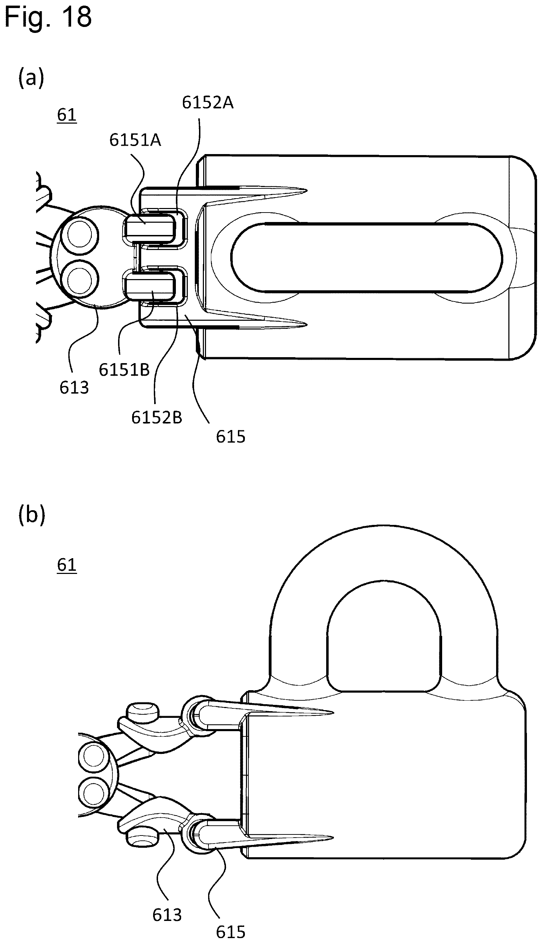

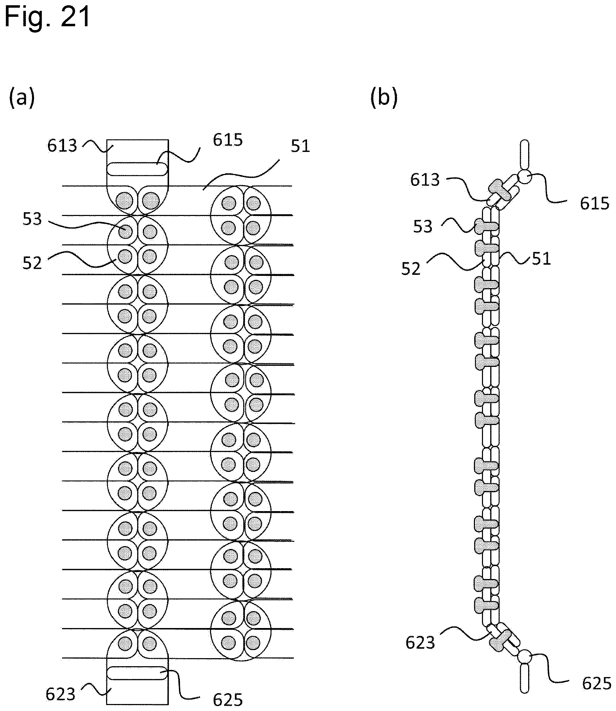

Figures 18 to 21 illustrate the exemplary variation 2 of the ninth embodiment of the present invention. This example is aimed to maximize the elasticity in order to maximize friction to be generated upon extending. This point is now detailed. Figure 21(a) is a schematic development view of the body 11, and the Figure 21(b) is a side view thereof. Both of the figures show the body 11 in the most contracted state. The plate members 51 are ideally laid approximately horizontally and aligned to contact tightly with adjoining ones as shown in Figure 21(a), in the most contracted state. The braking device 1 of the present invention stops moving relative to the rope 2 by means of friction generated upon extension of the body 11, and generated friction can be larger dependent on the elasticity of the braking device 1 at the start of extension. That is to say, the friction is maximized by starting extension from the most elastic state shown in Figure 21(a). On the other hand, if the plate members 51 are more spaced from each other at the most contracted state compared to the illustration of Figure 21(a), the friction generated upon extension is smaller than the maximum friction.

In this exemplary variation, the elasticity is increased by comprising a movable mechanism 615, 625 on at least one of the upper joint part 613 and the lower joint part 623. An example of the upper joint part 613 is described below while the lower joint part may be the same. The movable mechanism 615 enables the end of the upper joint part 613 in the side connected to body 11 to turn outward relative to the rope 2. That is to say, by having the movable mechanism 615, the end of the upper joint part 613 is enabled to open to the outside as shown in Figure 21(b). This upper joint part 613 capable of opening to the outside facilitates the body 11 to be extended and contracted, leading to increase in elasticity. The structure of the movable mechanism 615 can be, for example, a hinge, while it is not limited herein. In the case of a hinge, a rod-shaped member may be arranged on the base part of the upper joint part 613 to serve as a turning shaft, and the end part of the upper joint part 613 is coupled thereto so as to be turnable along the surface of the rod-shaped member.

Figure 18 illustrates an example of the movable mechanism 615 by a hinge. Figure 18(a), (b) illustrate the upper cylindrical member 61, wherein Figure18(a) is a top view of the movable mechanism 615, and Figure 18(b) is a side view of movable mechanism 615. In Figure 18, the movable mechanism 615 comprises two rings 6151A, 6151B on the lower end surface of the upper cylindrical member 61. The rings 6151A, 6151B are turnably coupled to the movable mechanism 615 by passing through the openings 6152A, 6152B respectively while coupled to the upper joint part 613. There may be provided a turning shaft to be coupled to the rings 6151A, 6151B, instead of the openings 6152A, 6152B. Such configuration enables the rings 6151A, 6151B to be coupled to the upper cylindrical member 61 in a state where they are turnable to the outside (toward the opposite side of the rope 2).

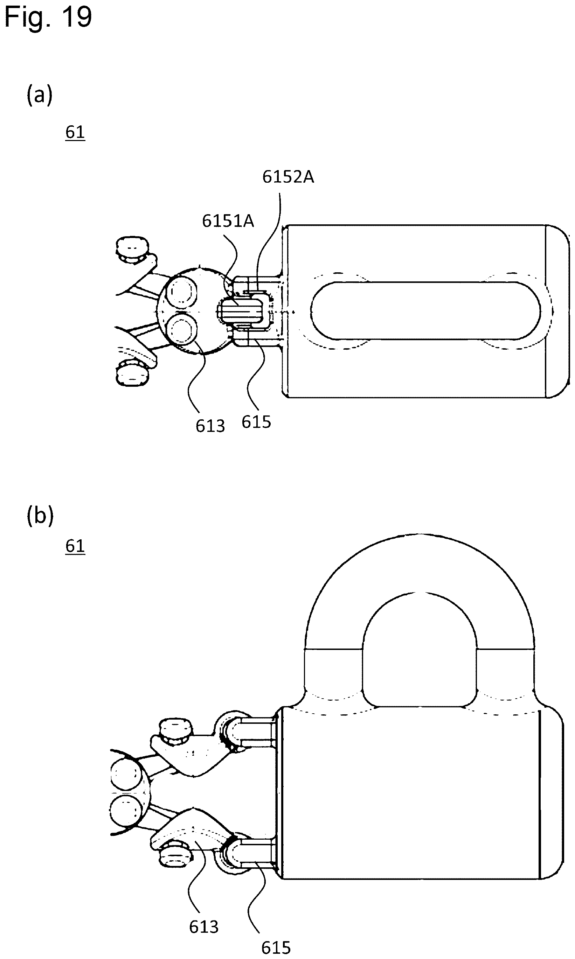

Figure 19 illustrates another example of the movable mechanism 615 by a hinge. The movable mechanism 615 of this example is different from that of Figure 18 in that it comprises only a single ring 6151A. Similarly to the foregoing example, the ring 6151A is turnably coupled to the movable mechanism 615 by passing through the opening 6152A, while coupled to the upper joint part 613.

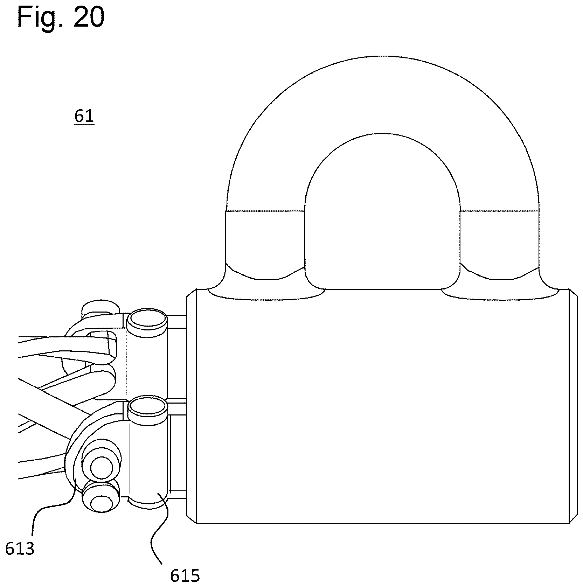

Figure 20 illustrates further example of the movable mechanism 615 by a hinge. In the example of Figure 20, the movable mechanism 615 comprises a turning shaft, and the movable mechanism is coupled to the upper joint part 613 in a state where the upper joint part 613 is turnable around the turning shaft.

### Exemplary variation 3 of the ninth embodiment

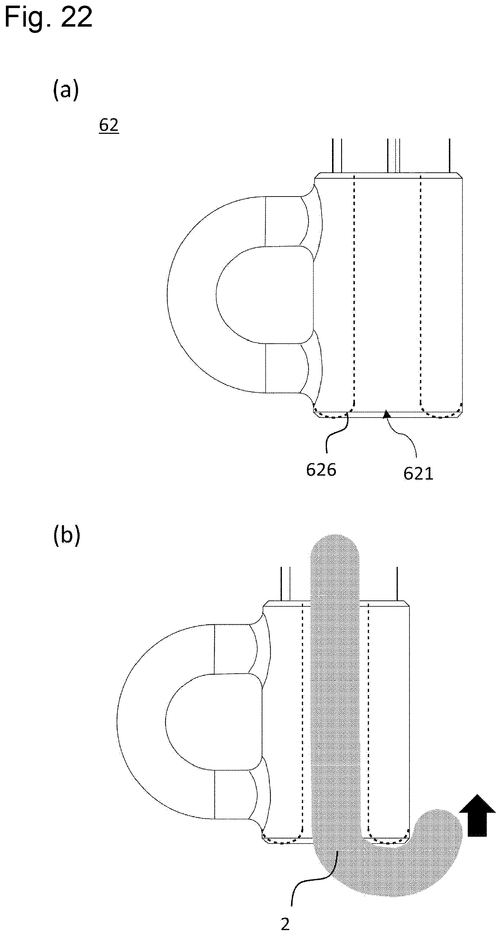

Figure 22 illustrates the exemplary variation 3 of the ninth embodiment of the present invention. The present exemplary variation is characterized by a curved surface 616, 626 formed on at least one of the upper cylindrical member 61 and the lower cylindrical member 62, at an edge where an inner surface of the through holes 611, 621 meets an end surface in the side opposite to the body 11. An example of the lower cylindrical member 62 is described below while the upper cylindrical member 61 may be the same. The lower cylindrical member 62 has a curved surface 626 at the lower edge of the inner surface of the through hole 621. The curved surface 626 preferably has an R-shape. The curved surface 626 is formed at least at the lower edge of the inner surface of through hole 621, more preferably formed at the lower edge of the outer surface as well, as shown in Figure 22. According to the present variation, the curved surface 626 can prevent the rope 2 from being caught by the lower edge when lifting up the lower end of the braking device 1 by pulling up the rope 2 in the direction shown by an arrow in Figure 22(b).

### Exemplary variation 4 of the ninth embodiment

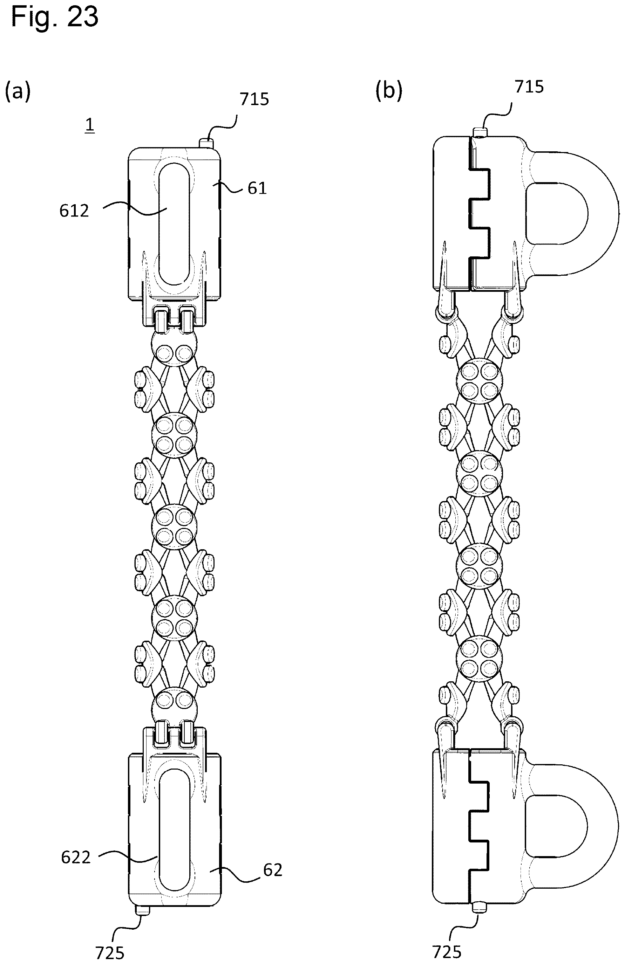

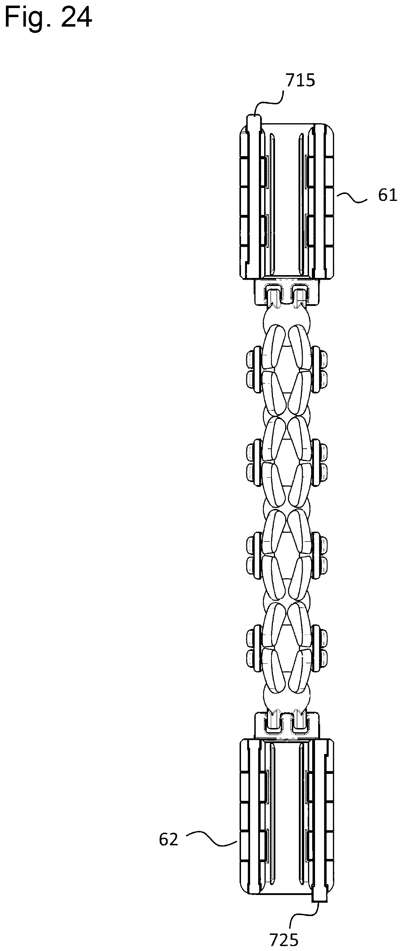

Figures 23 to 26 illustrate the exemplary variation 4 of the ninth embodiment of the present invention. In the present variation, at least one of the upper cylindrical member 61 and the lower cylindrical member 62 comprises an opening and closing mechanism 71, 72 capable of opening and closing the side wall. An example of the upper cylindrical member 61 is described below while the lower cylindrical member 62 may be the same.

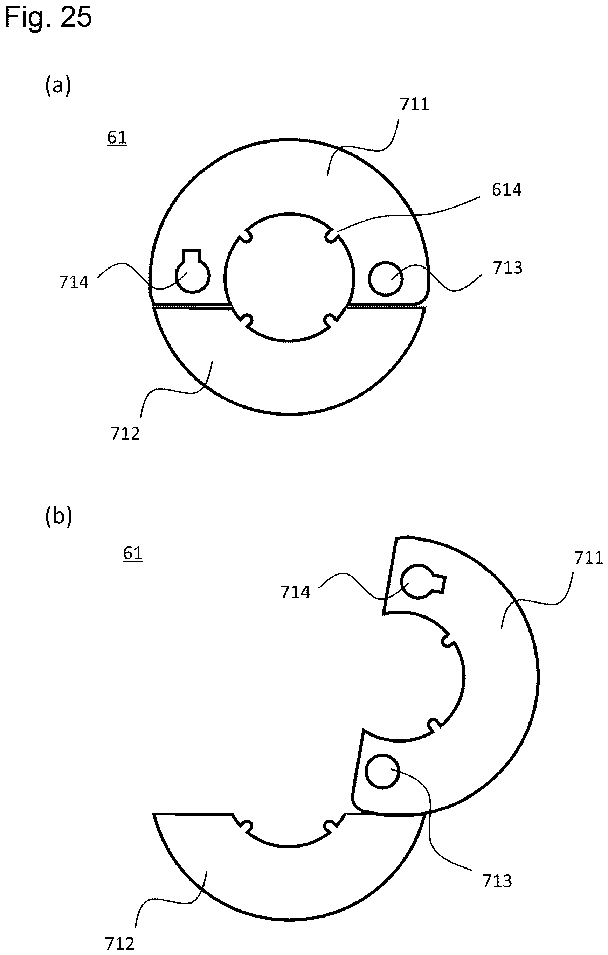

Figure 25 schematically illustrates the lower end surface of the upper cylindrical member 61. In the present variation, the upper cylindrical member 61 comprises a first member 711 and a second member 712. The first member 711 and the second member 712 contact with each other along the longitudinal direction of the cylindrical member such that they form a cylindrical shape as a whole in a closed state. The first member 711 and the second member 712 are turnably coupled to each other at one coupling side by means of a turning shaft penetrating both members. At the other coupling side, the first member 711 and the second member 712 comprise a through hole 714 penetrating both members, so that the both members can be locked in the closed state by inserting a fixing pin 715 into the through hole 714. Figure 25(a) illustrates the upper cylindrical member 61 in a closed state where the first member 711 and the second member 712 are coupled to each other at both coupling sides to form a cylindrical shape as a whole, while Figure 25(b) illustrates the upper cylindrical member 61 in an opened state where the first member 711 and the second member 712 are coupled at a coupling side with a turning shaft 713, such that the first member 711 is turnable around the turning shaft 713.

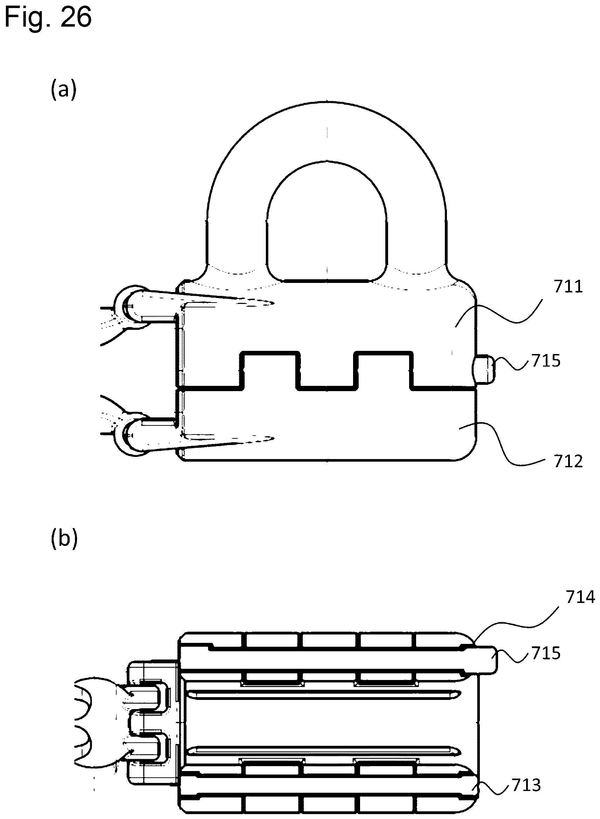

Figure 26(a) is a side view of the upper cylindrical member 61 and the Figure 26(b) is a sectional view thereof. The first member 711 and the second member 712 are formed to overlap alternately at the coupling side as shown in Figure26(a). The turning shaft 713 is disposed to penetrate the overlapping part of the first member 711 and the second member 712, so that the first member 711 and the second member 712 can be turnably coupled and held in the state. Similarly, the fixing pin 715 can also be inserted to penetrate the overlapping part of the first member 711 and the second member 712 at the other side. When using the braking device 1 according to the present invention, firstly it is unlocked by removing the fixing pin 715 and then the first member 711 is turned around the turning shaft 713 to make it into the opened state (Figure 25(b)). Subsequently, the rope 2 is inserted into the through hole 611, the first member 711 is closed to make it into the closed state (Figure 25(a)), and then the fixing pin 715 is inserted to the fixing pin through hole 714 to lock the first member 711 and the second member 712 in the closed state. The fixing pin through hole 714 may have any structure such as a key groove at its end in order to prevent the fixing pin 715 from slipping off.

According to the present variation, the opening and closing mechanism 71, 72 provided on at least one of the upper cylindrical member 61 and the lower cylindrical member 62 can facilitate the setting of the rope 2 inserting into the through hole. Alternatively, a diameter expanding mechanism to expand the diameter of through hole of the upper cylindrical member 61 and the lower cylindrical member 62 may be provided instead of the opening and closing mechanism 71, 72. The diameter expanding mechanism only needs to be capable of expanding the through hole when inserting the rope 2 and shrinking the expanded diameter before using, while the mechanism is not limited herein.

According to the present embodiment, a simple configuration comprising the upper cylindrical member 61, the lower cylindrical member 62, and the body 11 enables to brake the rope 2 reliably. In this embodiment, the braking device 1 may be vertically symmetric. In other words, the braking device 1 is similarly usable no matter which is a top or a bottom if the upper cylindrical member 61 and the lower cylindrical member 62 have the same configuration. This vertically symmetric property can reduce a risk of accidents due to incorrect use on site, consequently leading to better ease of use.

Although illustrative embodiments of the present invention have been described above, these embodiments are aimed to facilitate understanding of the invention, and not to be construed as limitation for the invention. The present invention may be changed and modified without departing from the scope of the invention, and the equivalent is also included therein.

- 1: Braking Device
- 2: Rope
- 3: Case
- 4: Protection member
- 9: Conventional braking device
- 11: Body
- 12: Upper end
- 13: Lower end
- 14: Hook
- 15: Hook
- 16: Gap
- 21: Fixing Part
- 22: Fixing Part
- 23: Slit
- 41: Ring
- 42: Ring
- 43: End
- 91: Body
- 92: Swivel part
- 93: Pivot
- 94: Hole part
- 95: End
- 96: Inner guiding wall
- 97: Groove
- 101: Body
- 102: Upper end
- 103: Lower end
- 104: Hook

## Claims

1. A braking device comprising:
a friction member surrounding a rope; and
a hook for applying tension to the friction member in a longitudinal direction of the rope;
wherein the friction member is actuated to contact the rope when the tension is applied thereto, and the friction member comprises:
one or more rings arranged at each of a first and a second end of the friction member; and
a rod-shaped member penetrating both of the rings at the first and the second end of the friction member.

2. A braking device comprising:
a friction member surrounding a rope; and
a hook for applying tension to the friction member in a longitudinal direction of the rope;
wherein the friction member is actuated to contact the rope when the tension is applied thereto, and the friction member is configured by connecting a plurality of plate members with a plurality of joint members to form a cylindrical shape.

3. The braking device according to claim 1 or 2, wherein the friction member is a spring.

4. The braking device according to claim 1 or 2, further comprising a covering for housing the friction member, wherein the first end of the friction member is fixed to the covering, a first one of the hook is arranged on the covering, and a second one of the hook is arranged on the second end of the friction member.

5. The braking device according to claim 1 or 2, wherein the friction member is formed to have a cylindrical shape with a square or an octagonal cross section.

6. The braking device according to claim 1 or 2, further comprising a covering for housing the friction member.

7. A braking device comprising:
a friction member surrounding a rope; and
a hook for applying tension to the friction member in a longitudinal direction of the rope;
wherein the friction member is actuated to contact the rope when the tension is applied thereto, the friction member has elasticity in the longitudinal direction of the rope, and the friction member comprises:
a plurality of first members with an elongated shape; and
a plurality of second members turnably connecting the first members.

8. The braking device according to claim 7, wherein the plurality of the first members are arranged to make certain angle to the longitudinal direction.

9. The braking device according to claim 8, wherein each one of the plurality of the second members connects four of the plurality of the first members together, each one of the plurality of the first members being connected to the second members at their both ends.

10. The braking device according to any one of claims 7 to 9, further comprising:
a first through hole arranged on each of the first members;
a second through hole arranged on each of the second members; and
a pin penetrating the first and the second through holes.

11. The braking device according to any one of claims 7 to 10, wherein the first member is curved to be convex outward.

12. The braking device according to any one of claims 7 to 11, wherein the friction member is formed to have a cylindrical shape with a polygonal cross section.

13. The braking device according to claim 12, wherein the polygonal cross section is a square or an octagon.

14. A braking device comprising:
a friction member surrounding a rope; and
a hook for applying tension to the friction member in a longitudinal direction of the rope;
wherein the friction member is actuated to contact the rope when the tension is applied thereto, the friction member has elasticity in the longitudinal direction of the rope, and the friction member is configured by weaving a plurality of long elastic members obliquely against the longitudinal direction.

15. A braking device comprising:
a friction member surrounding a rope;
an upper cylindrical member arranged on top of the friction member; and
a lower cylindrical member arranged at the bottom of the friction member;
wherein the friction member is actuated to contact the rope when tension is applied thereto, and the friction member has elasticity in a longitudinal direction of the rope.

16. The braking device according to claim 15, wherein at least one of the upper cylindrical member and the lower cylindrical member has one or more projections on its inner wall.

17. The braking device according to claim 15 or 16, wherein at least one of the upper cylindrical member and the lower cylindrical member has a joint part for coupling to at least one end of the friction member, and the joint part comprises a movable member which is turnable in a direction to expand a diameter of the friction member.

18. The braking device according to claim 17, wherein the movable member is a hinge.

19. The braking device according to any one of claims 15 to 18, wherein at least one of the upper cylindrical member and the lower cylindrical member has an R-shape at an edge formed by the inner wall and an end surface on the side opposite to the friction member.

20. The braking device according to any one of claims 15 to 19, wherein at least one of the upper cylindrical member and the lower cylindrical member has an opening and closing mechanism on a side wall thereof.

21. The braking device according to any one of claims 15 to 20, wherein the braking device is vertically symmetric.
